Europäisches Patentamt

(19)   European Patent Office

Office européen des brevets

(11)   **EP 0 823 305 A2**

(12)   **EUROPEAN PATENT APPLICATION**

(43) Date of publication:
**11.02.1998  Bulletin 1998/07**

(21) Application number: **97113663.5**

(22) Date of filing: **07.08.1997**

(51) Int. Cl.$^6$: **B23K 35/28**, B23K 35/14,
B32B 15/01
// B23K101:14

(84) Designated Contracting States:
AT BE CH DE DK ES FI FR GB GR IE IT LI LU MC NL PT SE

(30) Priority:  08.08.1996 JP 225860/96
08.08.1996 JP 225861/96
27.11.1996 JP 331496/96

(71) Applicants:
• DENSO CORPORATION
Kariya-City Aichi-Pref. 448 (JP)
• SUMITOMO LIGHT METAL INDUSTRIES, LTD.
Tokyo 105 (JP)

(72) Inventors:
• Hasegawa, Yoshiharu
Obu City, Aichi (JP)

• Miyachi, Haruhiko
Okazaki City, Aichi (JP)
• Hirao, Koji
Tokai City, Aichi (JP)
• Suzuki, Yuji
Tashioka City, Ibaraki (JP)
• Ikeda, Hiroshi
Nagoya City, Aichi (JP)
• Tanaka, Hirokazu
Tajimi City, Gifu (JP)
• Koyama, Takahiro
Ishioka City, Ibaraki (JP)

(74) Representative:
Neumann, Ernst Dieter, Dipl.-Ing. et al
Harwardt Neumann Patent- und Rechtsanwälte,
Brandstrasse 10
53721 Siegburg (DE)

(54)   **A brazing sheet having an excellent corrosion resistance for use in a heat exchanger, and a heat exchanger using the same**

(57)      The brazing sheet which has an excellent corrosion resistance, and cladding rolling property, and is of four layered aluminum alloy cladding member, and the heat exchanger of aluminum alloy, in which the brazing sheet is used, are provided. The brazing sheet is suitable for use in a constitutional member of fluid path of the aluminum heat exchange for car, and particularly, as a core plate of drawn cup type heat exchanger. In the brazing sheet, one side of a core member is cladded with an intermediate member having more basic than a core member, and the other side of both core member and intermediate member are cladded with Al-Si-Mg type cladding member, wherein the core member is of aluminum alloy comprising 0.5 to 1.6 % of Mn, 0.15 to 0.35 % of Cu, 0.05 to 0.50 % of Mg, 0.06 to 0.30 % of Ti, and remainder of Al and unavoidable impurity, and the intermediate member comprises 0.5 to 1.2 % of Mn and remainder of aluminum and unavoidable impurity, and 0.05 to 1.2 % of Mg, on demand, and has 70 to 130 % of deforming resistance. The intermediate member may be composed of aluminum alloy comprising 1 to 5 % of Zn, 0.5 to 1.2 % of Mg, and remainder of Al and unavoidable impurity.

When the heat exchanger is formed using the brazing sheet having the intermediate member containing Zn, an amount of Zn is preferably controlled to 0.5 to 2.5 % at a boundary between the intermediate member and core member, and 0.3 % or lower as an average amount thereof in the core member, from the thickness center to the boundary between the intermediate member.

EP 0 823 305 A2

**Description**

Field of the invention

The present invention concerns a brazing sheet having an excellent corrosion resistance for use in an heat exchanger, and a heat exchanger using the same. The brazing sheet of the present invention is used for the heat exchanger in a car, for example, which is suitable as a constitutional member for fluid path in the heat exchanger, such as an evaporator, and inter cooler in the car air-conditioner, which is jointed by vacuum brazing process. In particular, the present invention concerns a brazing sheet of aluminum alloy, which is the most preferably used as the constitutional member for a fluid pass in a drawn cup type heat exchanger, and the heat exchanger using said brazing sheet.

Background of the invention

In an oil cooler, inter cooler, heater, evaporator of air conditioner, condenser, and etc. in a heat exchanger for car, and oil cooler for oil press machine, and industrial machine, a various type of the heat exchanger of aluminum alloy is used. For example, a corrugated fin type heat exchanger, which has been mainly used in condenser and evaporator once, is constituted by brazing jointing a brazing sheet fin member, which was formed into corrugated configuration, and multiple holes flat tube, processed by cerpentain process.

On the other hand, a drawn cup type heat exchanger, which shows excellent performance and has been propagated particularly as the evaporator, is formed by superposing core plates, which are made by press forming a cladding brazing sheet having brazing members on both side, integrating with a fin member of aluminum alloy, which is processed for forming corrugate, and jointing together by brazing. The fluid path is formed between core plates piled.

The core plate is formed by using a brazing sheet, which is composed of the core member of alloy, such as Al-Mn type, Al-Mn-Cu type, Al-Mn-Mg type, and Al-Mn-Cu-Mg type, which contains JIS 3003 alloy, 3005 alloy, etc. as a main alloy component, for which a brazing member of Al-Si-Mg type is cladding. As for the fin member, a materials of Al-Mn type, Al-Mn-Mg type, Al-Mn-Cu type, and Al-Mn-Zn type are used. A junction between the core plate and fin member is generally conducted by a vacuum brazing.

In the brazing sheet discussed above, the core member containing Mn, as a principal component, does not always show sufficient in pitting corrosion resistance, if it is used as a fluid path member for coolant, an accident due to penetrating leakage from outside (air side) is liable to be cause so often. As for a countermeasure, a corrosion resistance for the fluid path is proposed, for example, by using potentially lesser basic metal than those of the path material, such as Al-Mn-Zn alloy, Al-Mn-Sn alloy, etc., according to a sacrificial anode effect of said fin member.

However, particularly in a case of an evaporator, when the coolant is evaporated in the heat exchanger by removing heat from atmosphere, a surface temperature of the heat exchanger is lowered, resulting in condensing moisture containing in the atmosphere and forming droplets on the fin. Since said droplets contain little amount of impurity, an electric conductivity is rather lower, and an electric current generated due to the sacrificial anode effect may be reached to as far as near joining part in the fin. Accordingly, the sacrificial effect will not reach to a part, where even slightly farther from the joining point in the fin. Furthermore, if a contaminants, such as an exhaust gas from a light oil, and car engine, or $SO_4^{-2}$, $NO_3^-$, are contained in the droplets, it is condensed and maintained in a pitching corrosion, thereby remarkably promoting corrosion, and causing penetrating corrosion in the core plate. These corrosions are liable to cause leaking coolant, which may be problem.

To overcome said problems, a four layered cladding, in which an intermediate member A 1 alloy having 20 to 100 mV lower potential than the core material, is interposed between the core member and brazing member, is proposed (Japanese Laid-open Patent Publication No. Sho 60-251243). Although, these cladding materials comprise as a core member an aluminum alloy containing 0.2 to 1.0% of Si, 0.1 to 0.5% of Mg and 0.2 to 1.0% of Cu as essential components and as an intermediate member an aluminu alloy containing at least one member of 0.05 to 0.5% of Mn and 0.05 to 0.5% of Mg, etc, these cladding member, however, may be expected to improve in corrosion resistance, a strength after brazing process is weak, thereby being difficult to maintain pressure resistance as the heat exchanger. Further, a junction between each layers is liable to be insufficient during hot rolling. Since a strength and elongation of each layers are not uniform, a cladding element is liable to be warped, and a problem in manufacturing step may also be caused, such that a cladding rate is varied widely.

Another approach for expecting corrosion resistive effect by sacrificial effect of Zn by adding thereof to the brazing element, may also be tried, however, regardless of the effectiveness of Zn as a sacrificial anodes, Zn shows drawbacks. When the brazing is taken place, since a vapor pressure of Zn in brazing temperature is higher than a vacuum pressure in the brazing furnace, almost of Zn is evaporated during the brazing process, and does not maintained in the plate member, resulting in causing troubles that no sacrificial anode effect may be attained. As an alternative approach, Zn plating may be carried out over the evaporator after brazing, followed by heat treating for dispersing Zn, but said process steps requires many steps, resulting in causing high coast.

In the case where an intermediate member is provided between the core member and brazing member, if a difference in elongation between the intermediate member and the core element is existed, troubles such as occurring warping on hot rolling, being liable of causing insufficient joint between each layers, causing variety in thickness of the claddings, may be found. In the problem for warping, said problem may be reduced in some extent by slowing down the rolling speed, however, said process lowers the production efficiency, and is inadequate for mass production.

In the drown cup type heat exchanger, a fluid path is formed using annealed member (O member) as a plate member, and by joining the plates each other, after press forming thereof. A stress caused in the press forming is recrystallized in the subsequent brazing step, and the stress is disappeared. But in the case of the Al-Mn type alloy, since a recrystallization temperature requires higher, when the stress caused is a little, the stress can not completely disappeared even under the temperature in melting the brazing, and forms a state for maintaining subgrain boundaries, which is caused by stress recovered. In the subgrain boundaries, since a dispersion is easily occurred, thereby dispersing a lot of Si brazing into the core member, resulting in being lack of brazing, which is required for jointing, and causing no brazing. In a part where the brazing is penetrated, a corrosion resistance is deteriorated, and the strength is also lowered. In order to overcome said problems, a various methods are proposed that a homogenizing treatment of the core member is carried out at higher temperature, and final annealing is conducted at higher temperature for long time, however, these are not effective as a sufficient countertreatment.

Summary of the invention

An object of the present invention is to provide a brazing sheet for heat exchanger which has excellent corrosion resistance, and is of four layered aluminum alloy cladding member, in which one side of a core member is cladded with an intermediate member having more basic than a core member, and the other side of both core member and intermediate member are cladded with Al-Si-Mg type cladding member, wherein the core member is of aluminum alloy comprising 0.5 to 1.6 % of Mn, 0.15 to 0.35 % of Cu, 0.05 to 0.70 % of Mg, 0.06 to 0.30 % of Ti, and remainder of Al and unavoidable impurity.

Another object of the present invention is to provide a heat exchanger of aluminum alloy, which is composed of four layered aluminum cladding brazing sheet, in which one side of a core member is cladded with an intermediate member of less-noble than a core member, and the other sides of both core member and intermediate member are cladded with Al-Si-Mg type cladding member, wherein the core member is of aluminum alloy comprising 0.5 to 1.6 % of Mn, 0.15 to 0.35 % of Cu, 0.05 to 0.70 % of Mg, 0.06 to 0.30 % of Ti, and remainder of Al and unavoidable impurity, and the intermediate member is of aluminum alloy comprising 1 to 5 % of Zn, 0.5 to 1.2 % of Mg, and remainder of Al and unavoidable impurity, a plural number of the brazing sheets are superposed each other so that the intermediate members may be faced outward, and the superposed brazing sheets are joined together by brazing, wherein a concentration of Zn in boundary between the core member and the intermediate member after brasing is 0.5 to 2.5 %, and an average concentration of Zn between a thickness center of the core member to a boundary between the core member and a brazing member, is preferably 0.3 % or lower. Percent (%) for aluminum alloy composition is weight percent (wt%).

Brief description of the drawings

Fig. 1 shows a shematical view of press forming members;
Fig.2 shows a cross sectional view of the complete brazing article, in which the press forming member is jointed by brazing process;
Fig. 3 shows an enlarged view of the brazing part A, in detailed.

Detailed description of the invention

In order to obtain four layered cladding member, which is to overcome the above problems caused in a fluid path in the heat exchanger of aluminum alloy, the present inventors have been experimented and studied on the intermediate member for overcoming the problems in providing an excellent corrosion resistance and in forming the cladding. As the results, the inventors were found that when aluminum alloy adding Mg is used as an intermediate member, Mg shows a function for deteriorating the potential, and improving the strength, thereby being capable of carrying out hot rolling cladding, in stable.

Further, the inventors found that when Mn, additionally with Mg, is added into an intermediate member, Mn is reacted with Si, which is dispersed from the brazing member in brazing process, and forms Al-Mn-Si type compound. A potential is maintained as basic condition in order to make an amount of solid solution smaller, whereas a strength of the intermediate member is increased by adding Mn and Mg, resulting in being capable of applying hot rolling on the cladding, in sable.

Still further, the inventors found that when Zn is added to the intermediate member, following phenomenon is caused.

That is, in a part of the cladding member near the surface thereof, Zn is dispersed towards a brazing side, and is evaporated in brazing process, but in a core member side far from the surface thereof, Zn is remained without evaporation. Since Zn is dispersed also towards the core member, a concentration of Zn shows maximal at around boundary between the intermediate member and core member, and shows a distribution so that the concentration may become lower at both brazing and core members sides. Accordingly, a potential distribution in the core member shows mostly basic at the boundary with the intermediate member, and shows gradually nobility towards inside of the core member. Thus, the intermediate member and core member at the intermediate member side form sacrificial anodes with respect to the core member at a side of without intermediate member (brazing member side), thereby suppressing pitching corrosion.

The present invention was achieved by the above findings, and by the results of experiments and studies on a combination in compositions of the core member and intermediate member. An object of the present invention is to provide an aluminum alloy brazing sheet having excellent corrosion resistance and cladding rolling performance, which is capable of forming heat exchanger by vacuum brazing operation, particularly, a brazing sheet, which is capable of preferably using as a core plate member in the drawn cup type heat exchanger, and the heat exchanger using said brazing sheet.

The brazing sheet member for the heat exchanger according to the present invention in order to accomplish above object, is characterized by a aluminum alloy brazing sheet, which is formed by cladding an intermediate member, which shows lower basic potential than those of a core member, onto one face of the core member, and further cladding Al-Si-Mg type claddings on the other faces of the intermediate member and core member, wherein the core member comprises 0.5 to 1.6 % of Mn; 0.15 to 0.35 % of Cu; 0.05 to 0.50 % of Mg; 0.06 to 0.30 % of Ti, and remainder of Al and impurities.

The other features of the heat exchanger of the present invention are summarized as follows:

A. The intermediate member is made of Al alloy composed of 0.3 to 1.5 % of Mg and the remainder of Al and unavoidable impurities, and has 70 to 130 % of a deforming resistance rate based on those of the core member. A thickness of the intermediate member in the four layered cladding is 30 to 150 μm.

B. The intermediate member is made of Al alloy, composed of 0.5 to 1.2 % of Mn, and the remainder of Al and unavoidable impurities, or 0.5 to 1.2 % of Mn, 0.05 to 1.2 % of Mg, and unavoidable impurities, and has 70 to 130 % of a deforming resistance rate based on those of the core member. A thickness of the intermediate member in the four layered cladding is 30 to 150 μm.

C. The intermediate member is made of Al alloy composed of 1 to 5 % of Zn, 0.5 to 1.2 % of Mg, and the remainder of Al and unavoidable impurities.

The heat exchanger according to the present invention is formed by superimposing the brazing sheets each other, which are press formed previously, having the intermediate member C above, so as to be placed that the intermediate member is positioned outside, and brazing the brazing sheets. The heat exchanger of the present invention is characterized by controlling a Zn concentration at the boundary between the intermediate member and the core member being 0.5 to 2.5 % and average Zn concentration in the core member from the center of the thickness to the boundary between the core member and brazing member.

Detailed description of the preferred embodiments

An object for adopting additives and a reason for restricting the same in the core member and the intermediate member are explained in more detailed below.

A. Core member

Mn is functioned as improving in a strength of the core member, and making a potential difference between the core member and the fin member larger, so that anti pitching corrosion may be enhanced. An amount of Mn is preferably 0.5 to 1.6 %, and more preferably 0.7 to 1.4 %. With less than 0.5 %, an expected efficient is low, and with over 1.6 %, a large grain of the compound will be formed in a casting, thereby making difficulty in rolling operation for obtaining sound plate.

Cu functions for improving strength of the core member, and making a potential of the core member noble, thereby making a potential difference larger to improve corrosion effect by sacrificial anode effect. An amount of Cu is preferably 0.15 to 0.35 %. With less than 0.15 %, an expected efficient is low, and with over 3.5 %, an elongation of the brazing sheet becomes lower, resulting in being liable of causing cracks on press forming operation.

Mg shows advantage for improving strength of the core member, and also functions for improving corrosion resistance of the core member by coexisting with Cu. An amount of Mg is preferably 0.05 to 0.50 %, and more preferably 0.1 to 0.34 %. With less than 0.05 %, an expected efficient can not be sufficiently attained, and with over 0.5 %, Mg will be unevenly distributed, thereby lowering the corrosion resistance, as well as being liable of penetrating the brazing member in brazing operation.

Ti exists separately in high and low concentration regions towards a thickness direction of the member, and these regions form layered structures, which are alternately superimposed, thereby creating layered corrosive constructions towards thickness direction, since the region of low concentration Ti is preferentially corroded comparing with the high concentration region. Thus, the corrosion resistance of the member is remarkable improved by interrupting progress in the corrosion towards thickness direction. An amount of Ti is preferably 0.06 to 0.30 %. With less than 0.06 %, an expected efficient can not be sufficiently attained, and with over 0.30 %, a huge crystal is liable to be caused in casting process, resulting in becoming difficulty for preparing sound member. In the core member, if 0.20 % or less of Si, 0.30 % or less of Fe, 0.15 % or less of Cr, and 0.15 % or less of Zr may be present, the property of the core member is never affected.

## B. Intermediate member

Mg in the intermediate member is an element for contributing improvement in a strength. Mg also makes improvement in cladding rolling property for reducing warp in press rolling operation by minimizing a strength difference between the core member. In the case of vacuum brazing operation, Mg existed near the surface layer may be evaporated on brazing, whereas, those near the core member are maintained to enhance a strength after brazing, thereby rising a pressure resistive strength. Further, said Mg makes a potential of the intermediate member noble, to improve the sacrificial anode effect.

Further, an Al-Mg type alloy used as the intermediate member generally has low recrystallizing temperature comparing with Al-Mn type alloy. For this reason, even if a slight strain is caused in the press forming operation, since the recrystallization will be completed before melting the brazing, the strain, due to such as dislocation, will be easily released. Thus, an inner grain penetration of the brazing is suppressed, and brazing property is further improved. An amount of Mn is preferably 0.3 to 1.5 %. With less than 0.3 %, an effect for improving strength can not be sufficiently attained, whereas, with over 1.5 %, a crystal grain becomes finer, thereby penetrating the melted brazing into crystal grain boundary, resulting in being liable of causing brazing defects. Besides these, Mg on a surface of the intermediate member is oxidized to deteriorate cladding joint property.

Mn in the intermediate member is an element for contributing improvement in strength, and improves cladding rolling property in reducing warp during cladding rolling operation due to a strength difference between the core member. An amount of Mn is preferably 0.5 to 1.2 %, most preferably 0.7 to 1.2 %. With less than 0.5 %, an effect for improving strength can not be sufficiently attained. In the state of the brazing sheet, Mn is formed in solid solution, with maintaining a potential as noble, however, according to a heating by the brazing, since Mn is reacted with Si in the brazing dispersed to form Al-Mn-Si type compound, the potential can not be noble due to reducing an amount of Mn solid solution. Thus, with a content of Mn being over1.2 %, since the compound above can not be sufficiently formed, the potential becomes noble state, resulting in lowering the sacrificing anode effect.

Mg, which is added with Mn, contributes improvement in strength, as well as Mn, and improves cladding rolling property for minimizing warp in cladding rolling operation by reducing a strength difference between the core member. An amount of Mg is preferably 0.05 to 1.2 %. With less than 0.05 %, an effect for improving strength can not be sufficiently attained, whereas with over 1.2 %, a crystal grain becomes finer after brazing operation, and melted brazing penetrates into the crystal grains boundary, thereby being liable of causing brasing defect. Further, a surface oxidation causes in hot rolling operation, to lower cladding joint performance.

According to the present invention, it is characterized that a strength difference between the core member and intermediate member makes smaller, thereby improving cladding rolling performance. As for the intermediate member, it is required to provide 70 to 130 % of the deformation resistance. With less than 70 %, and over 130 %, respectively, each of an intermediate layer and core member is liable to elongate and cause warp in the cladding rolling operation. If the significant warp is happened, the member will hit the rolling machine, resulting in sometimes stopping subsequent operation. It should be noted that the deformation resistance discussed herein means a deformation resistance under hot process, and average value thereof may be obtained by the following procedure:

A cylindrical specimen is upset at high temperature under respective compression rates, to obtain load-displacement curve, and stress-strain curve. Using a maximal load P, initial cross sectional area $A_0$, and correction factor f, obtained from upset rate, in each test, a deforming resistance in each upset is calculated by following equation to obtain average;

$$\text{deforming resistance} = P / ( A_0 \times f )$$

(please refer to Osakada, Kawasaki, and Mori; Annals of the CIRP, Vol. 30, No. 1, 1981).

According to the present invention, the potential of the intermediate member is more basic than the core member, and the intermediate member exhibits the sacrificial effect to the core member. On brazing operation, a dispersion of Cu to the brazing material is diminished, Cu concentration on the surface becomes lower, and the brazing material layer exhibits sacrificial effect, a cathode reaction, which causes corrosion, is also reduced, thereby improving the corrosion performance. A thickness of the intermediate member is preferably 30 to 150 $\mu$m, and with less than 30 $\mu$m, Cu is dispersed from the core member to the brazing material, to make the potential noble, resulting in reducing the sacrificial effect.

Since the intermediate member has more basic potential than the core member, as far as the intermediate member layer, a corrosion proceeds in relatively short time. Provided that the thickness of the intermediate member becomes over 150 $\mu$m, a thickness of the core member becomes thinner, thereby lowering a pitching life of whole cladding member.

Zn in the intermediate member enhances the sacrificial effect by making the potential basic state. An amount of Zn, in consideration of evaporation thereof in vacuum brazing, is preferably 1 to 5 %, the more preferably 1.2 to 5 %. With less than 1 %, an expected effect is too small, whereas with over 5 %, since an average Zn concentration in the core member after brazing operation, from the center of the core member thickness to a boundary between the core member and brazing member, is to be over 0.3 %, the sacrificial effect may become too large, and a noble core member, which should be maintained, is reduced, thereby becoming difficult for surely prohibiting pitching corrosion, and becoming increase in an evaporating amount of Zn, which inherently causes trouble in contamination of a furnace. In the vacuum brazing process, Mg, which is evaporated from the brazing member, is deposited on a wall of the furnace. If vacuum is released after brazing as it is, it is dangerous that said Mg on the wall of the furnace will react with oxygen in the atmosphere and will start burning. Thus, generally a small amount of Zn, which is similarly liable of evaporating in the vacuum brazing to Mg, is added in the fin member, so that Zn may be deposited on the wall of the furnace as forming a compound with Mg, for suppressing the reactivity of Mg with oxygen in the atmosphere.

In the present invention, since Zn, which is evaporated from the intermediate member, in vacuum brazing process, is deposited on the furnace wall, together with Mg, which is evaporated from the brazing member, it is not necessary to conventionally add Zn to the fin member, and 3003 alloy or 3203 alloy may be used as a fin member, as they are. Thus, a special fin member adding Zn element is not required, and a reduction in cost can be accomplished.

Mg, which is added with Zn, contributes to improve strength, and reduce a strength difference between the core member, thereby reducing warp in the cladding rolling process, and improving cladding rolling performance. In the vacuum brazing, since Mg existed near surface layer part is evaporated, whereas that existed a part near the core member is remained, a strength after brazing is also improved, thereby enhancing pressure resistance strength. Mg also shows a function for improving the sacrificial effect by making natural electrode potential basic. An amount of Mg content is preferably 0.5 to 1.2 %. With less than 0.5 %, an effect for improving strength can not be sufficiently attained, whereas with over 1.2 %, a crystal grain becomes finer after brazing operation, and melted brazing penetrates into the crystal grains boundary, thereby being liable of causing brazing defect. Further, a surface oxidation is caused in the hot rolling process, and cladding joint property is lowered.

The intermediate member of the present invention makes the natural electrode potential maintained as basic by adding Zn, and enhances the strength and makes smaller in the strength difference between the core member by adding Mg, thereby being capable of conducting cladding hot rolling, in stable condition. Since the intermediate member of the present invention does not contain Mn, the recrystallizing temperature is lower than those of Al-Mn type member. Accordingly, since even if the press rolling process is taken place at low level, the recrystal process may be completed before melting the brazing member, a transgranular penetration is hardly occurred, and problems for causing brazing defect due to lack of the brazing material, and for lowering the strength, are overcome, resulting in maintaining sufficient corrosion resistance.

Besides these, in the intermediate member, 0.2 % or lower of Si, 0.30 % or lower of Fe, 0.2 % or lower of Cr, Zr, or Ti, may be contained without affecting property of the brazing sheet according to the present invention.

The aluminum alloy brazing sheet for use in the heat exchanger according to the present invention is formed by the process, which comprises, for example, casting aluminum alloy, of which the core member, intermediate member and brazing member are composed, into ingots by semi-continuous casting, heating and soaking the ingots, and hot rolling into desired thickness, particularly for the intermediate member and brazing member, subsequently cladding by hot rolling in conventional manner after combining each member, and finally cold rolling the cladding into the desired thickness, and finally annealing.

When the brazing sheet of the present invention is formed into, for example, core plate for drawn cup type heat exchanger, a formed core plates are superposed each other, so that the intermediate member may be positioned outside, and these superposed plates are used for forming the drawn cup type aluminum heat exchanger for car, such as evaporator, a fin of aluminum alloy is assembled on the outside and the intermediate member side of the superposed core plates, and vacuum brazing thereof in the brazing furnace.

For this reason, in the brazing sheet of the present invention, Al-Si-Mg type brazing member is cladded for vacuum brazing. As the cladding member for vacuum brazing, Al-Si-Mg alloy is used, which basically contains 6 to13 % of Si, and 0.5 to 3.0 % of Mg. To improve the brazing property, at least on of the ingredients, selected from 0.2 % or lower of Bi, and 0.2 % or lower of Be, may also be contained.

In the heat exchanger formed by using the brazing sheet having the intermediate member, which contains said Zn, the sacrificial anode effect in the heat exchanger of aluminum, obtained by vacuum brazing process, is depending on a distribution of Zn, remaining after vacuum brazing. In the brazing process, Zn in the intermediate member is dispersed into the brazing member and core members. The Zn, dispersed into the brazing member, is evaporated in the brazing process, whereas those dispersed into the core member, is not evaporated. Thus, a concentration of Zn shows maximal near boundary between the intermediate member and core member, thereby forming Zn concentration gradient at the brazing member side and core member side. According to the present invention, Zn concentration at the boundary (boundary face and vicinity thereof) between the intermediate member and the core member, is preferably 0.5 to 2.5 %, whereas an average Zn concentration in the core member, from the thickness center of the core member to the boundary between the core member and the brazing member is 0.3 % lower.

With 0.5 % or lower of the Zn concentration at the boundary part of the intermediate member and core member, a potential gradation is little, and sufficient sacrificial anode effect can not be exhibited. On the other hand, with over 2.5 %, a plenty of the Zn is dispersed into the core member, thereby exhaustion of the core member becomes rapidly, and the penetrating life is liable to be deteriorated. Provided that an average Zn concentration in the core member, from thickness center thereof to a boundary between the core member and the brazing member, is over 0.3 %, the sacrificial anode effect of the intermediate member and the intermediate member side of the core member becomes too large, thereby reducing a noble core member, which should be protected, and becoming difficulty for surely preventing the penetration corrosion. In the present invention, since Cu is contained in the core member, said Cu is dispersed into the brazing member at the other side of the intermediate member, thereby making a potential of the core member at the brazing member side noble. According to a synergetic effect of the potential distribution by Cu, and those by Zn, a potential difference between the core member and the intermediate member becomes so larger that a sufficient sacrificial anode effect can be attained. Accordingly, even under environment of high electroconductive rate dilute solution, which can not be expected for attaining the sacrificial anode effect, an excellent corrosion resistance is able to be attained.

The present invention is further explained in more detailed with referring to the examples, which do not construe the scope of the present invention.

Example 1

By continuous casting, aluminum alloys for a core member, having compositions shown in Table 1, and for an intermediate member, having compositions shown in Table 2, were casted into ingots, and were treated for homogenization. For forming the intermediate member, the ingot was hot rolled to a desired thickness. Separately, a brazing member was prepared by casting an alloy( JIS BA4104, Si:10 %, Mg:1.5 %, and Bi: 0.1 % ) in the same manner, and hot rolling at 480 °C to such a thickness that a cladding rate might be 10 %, after surface grinding thereof. The core member, and intermediate member, having the same identification numbers in each Tables, and together with the brazing member, were superposed in an order of brazing-intermediate-core, and hot cladding rolled at 480 °C to obtain cladding plate of 3 mm in thickness. The cladding plate, thus obtained, was further cold rolled, and annealed to form a cladding plate (O member, brazing sheet) having 0.5 mm in thickness.

Table 1

| Core member | Composition(wt%) | | | | | | | |
|---|---|---|---|---|---|---|---|---|
| | Cu | Mn | Mg | Ti | Cr | Zr | Si | Fe |
| 1 | 0.17 | 1.23 | 0.18 | 0.16 | 0.03 | 0.01 | 0.09 | 0.19 |
| 2 | 0.32 | 0.89 | 0.22 | 0.18 | 0.01 | 0.02 | 0.19 | 0.13 |
| 3 | 0.30 | 0.53 | 0.21 | 0.22 | 0.02 | 0.11 | 0.14 | 0.22 |
| 4 | 0.27 | 0.72 | 0.14 | 0.20 | 0.13 | 0.02 | 0.12 | 0.24 |
| 5 | 0.31 | 1.36 | 0.24 | 0.13 | 0.03 | 0.03 | 0.08 | 0.27 |
| 6 | 0.25 | 1.55 | 0.17 | 0.16 | 0.04 | 0.01 | 0.11 | 0.16 |
| 7 | 0.17 | 0.79 | 0.07 | 0.17 | 0.06 | 0.01 | 0.07 | 0.08 |
| 8 | 0.25 | 0.89 | 0.12 | 0.18 | 0.05 | 0.02 | 0.09 | 0.15 |
| 9 | 0.30 | 0.99 | 0.28 | 0.20 | 0.01 | 0.01 | 0.10 | 0.23 |
| 10 | 0.24 | 0.98 | 0.60 | 0.15 | 0.03 | 0.02 | 0.16 | 0.17 |
| 11 | 0.19 | 1.20 | 0.18 | 0.07 | 0.01 | 0.17 | 0.17 | 0.19 |
| 12 | 0.24 | 1.14 | 0.22 | 0.14 | 0.03 | 0.04 | 0.10 | 0.17 |
| 13 | 0.26 | 1.13 | 0.18 | 0.23 | 0.02 | 0.03 | 0.16 | 0.19 |
| 14 | 0.28 | 1.17 | 0.20 | 0.28 | 0.04 | 0.02 | 0.17 | 0.23 |
| 15 | 0.25 | 1.09 | 0.19 | 0.14 | 0.02 | 0.01 | 0.10 | 0.22 |
| 16 | 0.30 | 0.84 | 0.28 | 0.17 | 0.12 | 0.01 | 0.12 | 0.21 |
| 17 | 0.31 | 0.90 | 0.27 | 0.15 | 0.01 | 0.03 | 0.13 | 0.23 |
| 18 | 0.24 | 1.07 | 0.17 | 0.17 | 0.03 | 0.03 | 0.12 | 0.18 |

Table 2

| Intermediate member | Composition(wt%) | | | | | | |
|---|---|---|---|---|---|---|---|
| | Mg | Si | Fe | Cu | Mn | Cr | Ti |
| 1 | 0.90 | 0.09 | 0.21 | 0.00 | 0.00 | 0.01 | 0.01 |
| 2 | 0.81 | 0.07 | 0.17 | 0.02 | 0.02 | 0.02 | 0.03 |
| 3 | 1.20 | 0.08 | 0.23 | 0.03 | 0.04 | 0.04 | 0.02 |
| 4 | 1.05 | 0.09 | 0.22 | 0.01 | 0.03 | 0.03 | 0.01 |
| 5 | 1.20 | 0.12 | 0.28 | 0.00 | 0.01 | 0.02 | 0.00 |
| 6 | 0.79 | 0.14 | 0.18 | 0.00 | 0.03 | 0.04 | 0.00 |
| 7 | 0.95 | 0.15 | 0.20 | 0.00 | 0.04 | 0.09 | 0.03 |
| 8 | 1.03 | 0.09 | 0.19 | 0.01 | 0.08 | 0.12 | 0.01 |
| 9 | 0.98 | 0.10 | 0.15 | 0.03 | 0.03 | 0.03 | 0.16 |
| 10 | 0.75 | 0.09 | 0.19 | 0.04 | 0.04 | 0.04 | 0.12 |
| 11 | 1.13 | 0.07 | 0.23 | 0.00 | 0.00 | 0.00 | 0.03 |
| 12 | 1.09 | 0.09 | 0.22 | 0.00 | 0.06 | 0.01 | 0.01 |
| 13 | 0.76 | 0.10 | 0.17 | 0.00 | 0.03 | 0.02 | 0.02 |
| 14 | 0.99 | 0.17 | 0.22 | 0.01 | 0.03 | 0.15 | 0.04 |
| 15 | 0.39 | 0.14 | 0.24 | 0.00 | 0.01 | 0.01 | 0.03 |
| 16 | 1.42 | 0.09 | 0.19 | 0.01 | 0.04 | 0.01 | 0.08 |
| 17 | 0.86 | 0.10 | 0.23 | 0.02 | 0.03 | 0.02 | 0.03 |
| 18 | 0.79 | 0.12 | 0.22 | 0.01 | 0.04 | 0.01 | 0.01 |

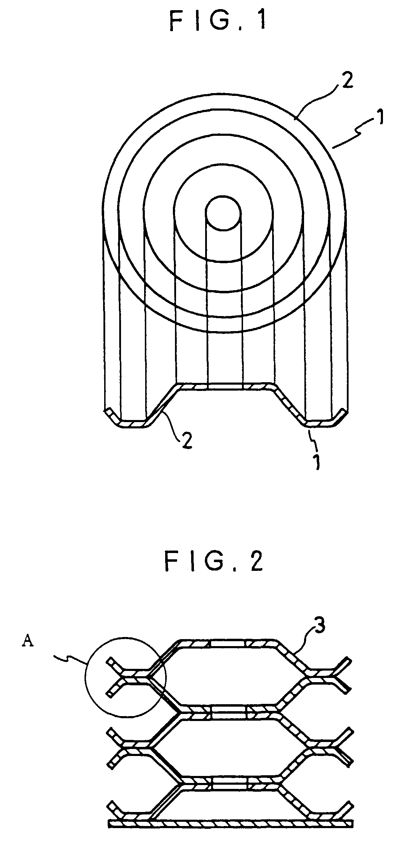

A circular plate was cut out from the cladding plate, and press formed into a shape 1, as shown in Fig. 1, so that the intermediate member might form convex face. The cop shaped pressing articles 2, shown in Fig. 2, were alternately interposed as shown in Fig. 2, and vacuum brazed to form brazed article 3. The brazing process was carried out under

$5 \times 10^{-5}$ Torr, or lower of vacuum, at 600 °C maintaining for 3 minutes.

A corrosion resistance test was conducted for the brazing article 3 using pseudo-condensed water. Said water contained 10 ppm of $Cl^-$, and 200 ppm of $SO_4^{2-}$, and sprayed continuously. The testing condition other than the water was according to a salt spray test (JIS Z 2371), and detected occurring leakage for 3000 hours testing. Separately, a single plate without conducting press forming was heated under the above vacuum brazing condition and was subjected to the same corrosion resistance test to evaluate the maximal depth of the corrosion.

Besides these, a cladding plate before brazing, and a single plate without press forming process, were heated under the vacuum brazing conditions, and evaluated thereof in a tensile strength test. As for the brazing article, attacking to the brazing member were evaluated in the cross sectional structure by microscope observation. After hot pressing the core member and intermediate member, a cylindrical specimen having 8 mm in diameter, and 16.5 mm in height, was cut out, and was subjected to a upset test at 480 °C, which was the same temperature as hot cladding rolling temperature, to measure a deforming resistance. The deforming resistance was evaluated by applying 10 mm/min. of stroke speed, and varying 20 to 80 % in the upsetting rate, to obtain the average.

The results of the deforming resistance of the core member and intermediate member, a ratio of the intermediate member with respect to that of the core member, a thickness of the intermediate member, a tensile strength before and after brazing process, and a result of the corrosion resistance are shown in Table 3. As seen from the results in Table 3, any specimens according to the present invention were able to form a sound cladding steel without causing warp in hot cladding rolling process, shows no penetration of the brazing member, shows excellent in tensile strength after brazing, and causes no cracking in a press forming process into a cup shaped article. In the corrosion resistance test, a maximal corrosion depth shows all less the 200 $\mu$m, and an excellent corrosion resisting property was exhibited without causing leakage in the brazed articles.

Table 3

| Specimen | Core member | Intermediate member | deforming resistance Core member (A) MPa | deforming resistance Intermediate member (B) MPa | B/A % | Thickness of intermediate member μm | Tensile strength Before brazing σ MPa | Tensile strength Before brazing δ % | Tensile strength After brazing σ MPa | Corrosion resistance test Maximal corrosion depth μm |
|---|---|---|---|---|---|---|---|---|---|---|
| 1 | 1 | 1 | 36 | 34 | 94 | 50 | 130 | 28 | 150 | 140 |
| 2 | 2 | 2 | 35 | 33 | 94 | 70 | 130 | 27 | 145 | 60 |
| 3 | 3 | 3 | 33 | 36 | 109 | 100 | 125 | 30 | 155 | 180 |
| 4 | 4 | 4 | 33 | 35 | 106 | 65 | 125 | 30 | 170 | 160 |
| 5 | 5 | 5 | 37 | 36 | 97 | 80 | 135 | 28 | 165 | 140 |
| 6 | 6 | 6 | 38 | 33 | 87 | 115 | 145 | 26 | 160 | 140 |
| 7 | 7 | 7 | 33 | 34 | 103 | 90 | 125 | 28 | 145 | 170 |
| 8 | 8 | 8 | 34 | 34 | 100 | 75 | 130 | 27 | 150 | 140 |
| 9 | 9 | 9 | 36 | 34 | 94 | 70 | 135 | 27 | 150 | 140 |
| 10 | 10 | 10 | 37 | 33 | 89 | 95 | 150 | 26 | 155 | 170 |
| 11 | 11 | 11 | 36 | 35 | 97 | 65 | 130 | 28 | 170 | 180 |
| 12 | 12 | 12 | 36 | 35 | 97 | 100 | 130 | 29 | 150 | 140 |
| 13 | 13 | 13 | 36 | 33 | 92 | 90 | 130 | 29 | 145 | 120 |
| 14 | 14 | 14 | 36 | 34 | 94 | 105 | 130 | 29 | 150 | 100 |
| 15 | 15 | 15 | 35 | 30 | 86 | 65 | 125 | 29 | 135 | 120 |
| 16 | 16 | 16 | 35 | 37 | 106 | 75 | 135 | 27 | 175 | 130 |
| 17 | 17 | 17 | 35 | 33 | 94 | 35 | 130 | 28 | 155 | 150 |
| 18 | 18 | 18 | 35 | 33 | 94 | 140 | 125 | 30 | 155 | 170 |

Comparative Example 1

By continuous casting, aluminum alloys for a core member, having compositions shown in Table 4, those for an intermediate member, having compositions shown in Table 5, and an alloy for brazing member ( JIS BA4104 ) were casted into ingots, and hot cladding rolled under the same conditions as of the Example 1, to form cladding plate having 3 mm in thickness. Subsequently the cladding plate was cold rolled, and annealed to finally obtain a cladding plate (O member, brazing sheet) having 0.5 mm in thickness. The cladding plate, thus obtained, was press formed, and treated with vacuum brazing in the same as of the Example 1, to evaluate possibility for press forming, and measured tensile strength, corrosion resistance test and micro structure observation. Furthermore, a deforming resistance of the core member, and of the intermediate member was evaluated, respectively, in the same manner as in the Example 1. The results of the deforming resistance for the core member and intermediate member, a ratio thereof, a thickness of the intermediate member, possibility in the press forming, a tensile strength, corrosion test, and microstructure observation are shown in Table 6.

Table 4

| Core member | Composition(wt%) | | | | | | | |
|---|---|---|---|---|---|---|---|---|
| | Cu | Mn | Mg | Ti | Cr | Zr | Si | Fe |
| 19 | 0.27 | 0.89 | 0.17 | 0.15 | 0.03 | 0.01 | 0.08 | 0.22 |
| 20 | 0.22 | 1.07 | 0.12 | 0.17 | 0.01 | 0.02 | 0.09 | 0.21 |
| 21 | 0.22 | 1.07 | 0.12 | 0.17 | 0.02 | 0.03 | 0.09 | 0.21 |
| 22 | 0.32 | 0.57 | 0.22 | 0.14 | 0.01 | 0.01 | 0.08 | 0.18 |
| 23 | 0.32 | 0.57 | 0.22 | 0.14 | 0.03 | 0.02 | 0.08 | 0.18 |
| 24 | 0.54 | 0.95 | 0.33 | 0.16 | 0.04 | 0.01 | 0.07 | 0.17 |
| 25 | 0.07 | 1.06 | 0.06 | 0.18 | 0.05 | 0.03 | 0.09 | 0.22 |
| 26 | 0.29 | 0.89 | 0.17 | 0.47 | 0.01 | 0.03 | 0.09 | 0.24 |
| 27 | 0.17 | 1.43 | 0.05 | 0.02 | 0.03 | 0.01 | 0.08 | 0.22 |
| 28 | 0.23 | 0.76 | 1.04 | 0.17 | 0.02 | 0.03 | 0.08 | 0.17 |
| 29 | 0.17 | 0.78 | 0.01 | 0.18 | 0.01 | 0.01 | 0.10 | 0.18 |
| 30 | 0.30 | 2.02 | 0.12 | 0.24 | 0.03 | 0.03 | 0.09 | 0.19 |
| 31 | 0.30 | 0.38 | 0.12 | 0.24 | 0.01 | 0.02 | 0.07 | 0.22 |

Table 5

| Intermediate member | Composition(wt%) | | | | | | |
|---|---|---|---|---|---|---|---|
| | Mg | Si | Fe | Cu | Mn | Cr | Ti |
| 19 | -- | -- | -- | -- | -- | -- | -- |
| 20 | 0.73 | 0.07 | 0.20 | 0.00 | 0.04 | 0.03 | 0.04 |
| 21 | 0.73 | 0.09 | 0.19 | 0.01 | 0.08 | 0.01 | 0.03 |
| 22 | 1.77 | 0.07 | 0.23 | 0.03 | 0.03 | 0.04 | 0.02 |
| 23 | 0.25 | 0.08 | 0.20 | 0.04 | 0.04 | 0.02 | 0.09 |
| 24 | 0.98 | 0.07 | 0.19 | 0.00 | 0.00 | 0.03 | 0.13 |
| 25 | 1.22 | 0.09 | 0.19 | 0.00 | 0.06 | 0.01 | 0.01 |
| 26 | 1.23 | 0.08 | 0.20 | 0.00 | 0.03 | 0.02 | 0.02 |
| 27 | 1.20 | 0.09 | 0.22 | 0.01 | 0.03 | 0.01 | 0.03 |
| 28 | 1.09 | 0.09 | 0.23 | 0.00 | 0.01 | 0.02 | 0.04 |
| 29 | 0.88 | 0.10 | 0.22 | 0.01 | 0.04 | 0.05 | 0.02 |
| 30 | 1.20 | 0.07 | 0.21 | 0.02 | 0.03 | 0.03 | 0.03 |
| 31 | 1.20 | 0.09 | 0.20 | 0.01 | 0.04 | 0.01 | 0.01 |

Table 6

| Specimen | Core member | Intermediate member | deforming resistance Core member (A) MPa | deforming resistance Intermediate member (B) MPa | B/A % | Thickness of intermediate member μm | Tensile strength Before brazing σ MPa | Tensile strength Before brazing δ % | Tensile strength After brazing σ MPa | Possibility in the press forming | Occurring of the brazing penetration in brazing process | Corrosion resistance test Maximal corrosion depth μm | Occurring of the leakage from brazing article |
|---|---|---|---|---|---|---|---|---|---|---|---|---|---|
| 19 | 19 | 19 | 35 | -- | -- | -- | 155 | 25 | 150 | O | O | Penetration | × |
| 20 | 20 | 20 | 36 | 34 | 94 | 20 | 160 | 29 | 165 | O | O | Penetration | × |
| 21 | 21 | 21 | 36 | 34 | 94 | 200 | 120 | 36 | 120 | O | O | 240 | O |
| 22 | 22 | 22 | 34 | 38 | 112 | 70 | -- | -- | -- | -- | -- | -- | -- |
| 23 | 23 | 23 | 34 | 23 | 67 | 90 | -- | -- | -- | -- | -- | -- | -- |
| 24 | 24 | 24 | 36 | 35 | 97 | 120 | 160 | 25 | 175 | × | × | 80 | -- |
| 25 | 25 | 25 | 33 | 35 | 106 | 75 | 150 | 29 | 155 | O | O | Penetration | × |
| 26 | 26 | 26 | 35 | 35 | 100 | 46 | -- | -- | -- | -- | -- | -- | -- |
| 27 | 27 | 27 | 35 | 35 | 100 | 39 | 155 | 28 | 165 | O | O | Penetration | × |
| 28 | 28 | 28 | 39 | 35 | 90 | 80 | 165 | 26 | 175 | O | O | Penetration | × |
| 29 | 29 | 29 | 34 | 34 | 100 | 110 | 135 | 30 | 140 | O | O | 420 | × |
| 30 | 30 | 30 | 39 | 35 | 90 | 80 | -- | -- | -- | -- | -- | -- | -- |
| 31 | 31 | 31 | 27 | 36 | 133 | 50 | -- | -- | -- | -- | -- | -- | -- |

Note: Press forming    O:Yes    ×:Causing cracks

Leakage from brazing article    O:No leakage    ×:Causing leakage

Penetration of brazing member    O:No penetration    ×:penetrating

As seen in the Table 6, because of Specimen No. 19 has no intermediate member, and Specimen No. 20 has thinner intermediate member, the sacrificial anode effect is little, resulting in casing the penetrating hole due to pitching in the corrosion resistance test. Since Specimen No. 21 has thick intermediate member, a tensile strength after brazing process shows inferior results. Since Specimen No. 22 contains large amount of Mg in the intermediate member, a surface oxidation was caused, and sound cladding plate can not be obtained. Since Specimen No. 23 contains small amount of Mg in the intermediate member, a deforming resistance of the intermediate member is low, and cladding rolling property is deteriorated, thereby being unavailable for forming sound cladding plate. Since Specimen No. 24 contains large amount of Cu in the core member, an elongation is too small, and cracks are happened in the press forming process, and press forming article can not obtained. Since Specimen No. 25 contains small amount of Cu in the core member, an electric potential between the intermediate member and core member becomes smaller, and the sacrificial anode effect becomes lowered, resulting in causing penetration in the corrosion resistance test.

Since Specimen No. 26 contains large amount of Ti in the core member, and forms large intermetallic compound in casting process, a sound cladding plate can not obtained. Since Specimen No. 27 contains small amount of Ti in the core member, a sufficient corrosion resistance can not be attained, resulting in forming penetrating hole in the corrosion

14

resistant test. Since Specimen No. 28 contains large amount of Mg in the core member, thereby deteriorating corrosion resistance, resulting in forming penetrating hole in the corrosion resistant test. Further, many penetrations were found at the side of no intermediate member. Since Specimen No. 29 contains little amount of Mg in the core member, and can not make potential sufficiently noble state, a potential difference between the core member and either intermediate member or brazing member, becomes smaller, resulting in causing a penetration in the corrosion test, and becoming smaller in the tensile strength after brazing process. Since Specimen No. 30 contains large amount of Mn in the core member, a sound cladding plate can not be obtained due to formation of large intermetallic compound. Since Specimen No. 31 contains small amount of Mn in the core member, a strength of the core member becomes weak, and since a ratio of the deforming resistance becomes over 130 %, a cladding rolling property is deteriorated, resulting in sound cladding plate can not be obtained.

Example 2

By continuous casting, aluminum alloys for a core member, having compositions shown in Table 7, and for an intermediate member, having compositions shown in Table 8, were casted into ingots, and were treated for homogenization. For forming the intermediate member, the ingot was hot rolled to a desired thickness. Separately, a brazing member was prepared by casting an alloy( JIS BA4104, Si:10 %, Mg:1.5 %, and Bi: 0.1 %) in the same manner, and hot rolling at 480 °C to such a thickness that a cladding rate might be 10 %, after surface grinding thereof. The core member, and intermediate member, having the same identification numbers in each Tables, and together with the brazing member, were superposed in an order of brazing-intermediate-core, and hot cladding rolled at 480 °C to obtain cladding plate of 3 mm in thickness. The cladding plate, thus obtained, was further cold rolled, and annealed to form a cladding plate (O member, brazing sheet) having 0.5 mm in thickness.

Table 7

| Core member | Composition(wt%) | | | | | |
|---|---|---|---|---|---|---|
| | Cu | Mn | Mg | Ti | Si | Fe |
| 32 | 0.17 | 0.86 | 0.11 | 0.15 | 0.09 | 0.19 |
| 33 | 0.32 | 1.16 | 0.23 | 0.16 | 0.19 | 0.13 |
| 34 | 0.21 | 0.53 | 0.18 | 0.18 | 0.14 | 0.22 |
| 35 | 0.25 | 1.37 | 0.16 | 0.19 | 0.12 | 0.24 |
| 36 | 0.25 | 1.55 | 0.21 | 0.22 | 0.08 | 0.27 |
| 37 | 0.30 | 1.20 | 0.08 | 0.21 | 0.11 | 0.16 |
| 38 | 0.28 | 0.95 | 0.45 | 0.19 | 0.07 | 0.08 |
| 39 | 0.31 | 1.31 | 0.22 | 0.07 | 0.09 | 0.15 |
| 40 | 0.24 | 0.76 | 0.17 | 0.28 | 0.10 | 0.23 |
| 41 | 0.26 | 0.77 | 0.19 | 0.20 | 0.16 | 0.17 |
| 42 | 0.30 | 1.04 | 0.20 | 0.17 | 0.17 | 0.19 |
| 43 | 0.27 | 1.11 | 0.16 | 0.15 | 0.10 | 0.17 |
| 44 | 0.19 | 1.20 | 0.29 | 0.14 | 0.12 | 0.19 |
| 45 | 0.30 | 1.20 | 0.24 | 0.19 | 0.13 | 0.23 |
| 46 | 0.28 | 1.12 | 0.22 | 0.18 | 0.12 | 0.22 |

Table 8

| Intermediate member | Composition(wt%) | | | | |
|---|---|---|---|---|---|
| | Mn | Mg | Si | Fe | Cu |
| 32 | 1.14 | 0.24 | 0.09 | 0.22 | 0.00 |
| 33 | 1.04 | 0.24 | 0.12 | 0.28 | 0.03 |
| 34 | 0.86 | 0.24 | 0.14 | 0.18 | 0.01 |
| 35 | 0.88 | 0.20 | 0.15 | 0.20 | 0.00 |
| 36 | 1.22 | 0.24 | 0.09 | 0.19 | 0.03 |
| 37 | 0.94 | 0.24 | 0.10 | 0.15 | 0.02 |
| 38 | 0.98 | 0.24 | 0.09 | 0.19 | 0.01 |
| 39 | 1.14 | 0.24 | 0.07 | 0.23 | 0.00 |
| 40 | 1.24 | 0.24 | 0.09 | 0.22 | 0.00 |
| 41 | 0.54 | 0.00 | 0.10 | 0.17 | 0.02 |
| 42 | 1.14 | 0.00 | 0.17 | 0.22 | 0.01 |
| 43 | 1.11 | 0.07 | 0.14 | 0.24 | 0.03 |
| 44 | 0.87 | 1.17 | 0.09 | 0.19 | 0.00 |
| 45 | 0.95 | 0.46 | 0.10 | 0.23 | 0.00 |
| 46 | 0.75 | 0.35 | 0.12 | 0.22 | 0.00 |

A circular plate was cut out from the cladding plate, and press formed into a shape 1, as shown in Fig. 1, so that the intermediate member might form convex face. The cop shaped pressing articles 2, shown in Fig. 2, were alternately interposed as shown in Fig. 2, and vacuum brazed to form brazed article 3. The brazing process was carried out under $5 \times 10^{-5}$ Torr, or lower of vacuum, at 600 °C maintaining for 3 minutes.

The results of the deforming resistance of the core member and intermediate member, a ratio of the intermediate member with respect to that of the core member, a thickness of the intermediate member, a tensile strength before and after brazing process, and a result of the corrosion resistance, which were conducted in the same manner as in the Example 1,are shown in Table 9. As seen from the results in Table 9, any specimens according to the present invention were able to form a sound cladding steel without causing warp in hot cladding rolling process, shows no penetration of the brazing member, shows excellent in tensile strength after brazing, and causes no cracking in a press forming process into a cup shaped article. In the corrosion resistance test, a maximal corrosion depth shows all less the 200 μm, and an excellent corrosion resisting property was exhibited without causing leakage in the brazed articles.

Table 9

| Specimen | Core member | Intermediate member | deforming resistance | | B/A | Thickness of intermediate member | Tensile strength | | | Corrosion resistance test |
|---|---|---|---|---|---|---|---|---|---|---|
| | | | Core member (A) | Intermediate member (B) | | | Before brazing | | After brazing | Maximal corrosion depth |
| | | | | | | | $\sigma$ | $\delta$ | $\sigma$ | |
| | | | MPa | MPa | % | μm | MPa | % | MPa | μm |
| 32 | 32 | 32 | 33 | 35 | 106 | 70 | 125 | 29 | 130 | 125 |
| 33 | 33 | 33 | 36 | 34 | 94 | 45 | 130 | 27 | 135 | 45 |
| 34 | 34 | 34 | 32 | 33 | 103 | 60 | 120 | 33 | 130 | 165 |
| 35 | 35 | 35 | 37 | 33 | 89 | 65 | 140 | 28 | 145 | 150 |
| 36 | 36 | 36 | 38 | 35 | 92 | 55 | 145 | 28 | 150 | 70 |
| 37 | 37 | 37 | 35 | 34 | 97 | 80 | 130 | 27 | 135 | 90 |
| 38 | 38 | 38 | 37 | 34 | 92 | 60 | 135 | 27 | 145 | 55 |
| 39 | 39 | 39 | 37 | 35 | 95 | 70 | 140 | 26 | 135 | 140 |
| 40 | 40 | 40 | 33 | 35 | 106 | 85 | 125 | 30 | 130 | 90 |
| 41 | 41 | 41 | 34 | 29 | 85 | 80 | 120 | 32 | 130 | 85 |
| 42 | 42 | 42 | 35 | 33 | 94 | 65 | 130 | 29 | 140 | 70 |
| 43 | 43 | 43 | 35 | 33 | 94 | 60 | 125 | 28 | 140 | 75 |
| 44 | 44 | 44 | 36 | 40 | 111 | 50 | 130 | 30 | 135 | 50 |
| 45 | 45 | 45 | 37 | 35 | 95 | 45 | 135 | 27 | 135 | 175 |
| 46 | 46 | 46 | 36 | 33 | 92 | 140 | 135 | 27 | 130 | 160 |

Comparative Example 2

By continuous casting, aluminum alloys for a core member, having compositions shown in Table 10, those for an intermediate member, having compositions shown in Table 11, and an alloy for brazing member ( JIS BA4104 ) were casted into ingots, and hot cladding rolled under the same conditions as of the Example 1, to form cladding plate having 3 mm in thickness. Subsequently the cladding plate was cold rolled, and annealed to finally obtain a cladding plate (O member, brazing sheet) having 0.5 mm in thickness. The cladding plate, thus obtained, was press formed, and treated with vacuum brazing in the same as of the Example 1, to evaluate possibility for press forming, and measured tensile strength, corrosion resistance test and micro structure observation. Furthermore, a deforming resistance of the core member, and of the intermediate member was evaluated, respectively, in the same manner as in the Example 1. The results of the deforming resistance for the core member and intermediate member, a ratio thereof, a thickness of the intermediate member, possibility in the press forming, a tensile strength, corrosion test, and microstructure observation are shown in Table 12

## Table 10

| Core member | Composition(wt%) | | | | | |
|---|---|---|---|---|---|---|
| | Cu | Mn | Mg | Ti | Si | Fe |
| 47 | 0.27 | 0.89 | 0.17 | 0.15 | 0.08 | 0.22 |
| 48 | 0.22 | 1.07 | 0.12 | 0.17 | 0.09 | 0.21 |
| 49 | 0.34 | 0.88 | 0.09 | 0.14 | 0.07 | 0.17 |
| 50 | 0.31 | 0.78 | 0.24 | 0.14 | 0.09 | 0.19 |
| 51 | 0.24 | 0.87 | 0.24 | 0.16 | 0.08 | 0.23 |
| 52 | 0.32 | 0.57 | 0.22 | 0.14 | 0.08 | 0.18 |
| 53 | 0.54 | 0.95 | 0.33 | 0.16 | 0.07 | 0.17 |
| 54 | 0.09 | 1.06 | 0.06 | 0.18 | 0.09 | 0.22 |
| 55 | 0.29 | 0.89 | 0.17 | 0.47 | 0.09 | 0.24 |
| 56 | 0.17 | 1.43 | 0.05 | 0.02 | 0.08 | 0.22 |
| 57 | 0.23 | 0.76 | 0.84 | 0.17 | 0.08 | 0.17 |
| 58 | 0.30 | 1.82 | 0.12 | 0.24 | 0.09 | 0.19 |
| 59 | 0.30 | 0.38 | 0.12 | 0.24 | 0.07 | 0.22 |

Table 11

| Intermediate member | Composition(wt%) | | | | |
|---|---|---|---|---|---|
| | Mn | Mg | Si | Fe | Cu |
| 47 | -- | -- | -- | -- | -- |
| 48 | 0.90 | 0.23 | 0.07 | 0.20 | 0.00 |
| 49 | 0.88 | 0.23 | 0.09 | 0.19 | 0.03 |
| 50 | 0.04 | 0.01 | 0.08 | 0.22 | 0.01 |
| 51 | 1.55 | 0.20 | 0.08 | 0.17 | 0.03 |
| 52 | 0.78 | 1.43 | 0.07 | 0.23 | 0.02 |
| 53 | 0.67 | 0.18 | 0.07 | 0.19 | 0.01 |
| 54 | 0.87 | 0.22 | 0.09 | 0.19 | 0.00 |
| 55 | 1.06 | 0.23 | 0.08 | 0.20 | 0.00 |
| 56 | 0.85 | 0.20 | 0.09 | 0.22 | 0.02 |
| 57 | 0.97 | 0.19 | 0.09 | 0.23 | 0.01 |
| 58 | 0.76 | 0.20 | 0.07 | 0.21 | 0.03 |
| 59 | 0.76 | 0.20 | 0.09 | 0.20 | 0.00 |

Table 12

| Specimen | Core member | Intermediate member | deforming resistance | | B/A | Thickness of intermediate member | Tensile strength | | | Possibility in the press forming | Occurring of the brazing penetration in brazing process | Corrosion resistance test | |
|---|---|---|---|---|---|---|---|---|---|---|---|---|---|
| | | | Core member | Intermediate member | | | Before brazing | | After brazing | | | Maximal corrosion depth | Occurring of the leakage from brazing article |
| | | | (A) | (B) | | | $\sigma$ | $\delta$ | $\sigma$ | | | | |
| | | | MPa | MPa | % | $\mu$m | MPa | % | MPa | | | $\mu$m | |
| 47 | 47 | 47 | 35 | -- | -- | -- | 155 | 25 | 150 | ○ | ○ | Penetration | × |
| 48 | 48 | 48 | 36 | 34 | 94 | 20 | 145 | 26 | 155 | ○ | ○ | Penetration | × |
| 49 | 49 | 49 | 35 | 34 | 97 | 190 | 125 | 37 | 125 | ○ | ○ | 176 | ○ |
| 50 | 50 | 50 | 35 | 20 | 57 | 60 | -- | -- | -- | -- | -- | -- | -- |
| 51 | 51 | 51 | 35 | 37 | 106 | 74 | 160 | 24 | 160 | ○ | ○ | Penetration | × |
| 52 | 52 | 52 | 34 | 39 | 115 | 60 | -- | -- | -- | -- | -- | -- | -- |
| 53 | 53 | 53 | 36 | 32 | 89 | 86 | 160 | 20 | 160 | × | ○ | 87 | -- |
| 54 | 54 | 54 | 33 | 34 | 103 | 75 | 120 | 35 | 120 | ○ | ○ | Penetration | × |
| 55 | 55 | 55 | 35 | 35 | 100 | 46 | -- | -- | -- | -- | -- | -- | -- |
| 56 | 56 | 56 | 35 | 34 | 97 | 63 | 140 | 28 | 150 | ○ | ○ | 340 | ○ |
| 57 | 57 | 57 | 39 | 35 | 90 | 68 | 155 | 20 | 145 | × | ○ | Penetration | -- |
| 58 | 58 | 58 | -- | 34 | -- | 64 | -- | -- | -- | -- | -- | -- | -- |
| 59 | 59 | 59 | 30 | 34 | 113 | 64 | 120 | 35 | 122 | ○ | ○ | Penetration | × |

Note: Press forming ○:Yes ×:Causing cracks

Leakage from brazing article ○:No leakage ×:Causing leakage

Penetration of brazing member ○:No penetration ×:penetrating

As seen in the Table 12, because of Specimen No. 47 has no intermediate member, and Specimen No. 48 has thinner intermediate member, the sacrificial anode effect is little, resulting in casing the penetrating hole due to pitching in the corrosion resistance test. Since Specimen No. 49 has thick intermediate member, a tensile strength after brazing process shows inferior results. Since Specimen No. 50 contains small amount of both Mg and Mn in the intermediate member, a deforming resistance of the intermediate member is low, and cladding rolling property is deteriorated, thereby being unavailable for forming sound cladding plate. Since Specimen No. 51 contains large amount of Mn, a sacrificial anode effect becomes lower, resulting in causing penetration hole in the corrosion resistant test. Since Specimen No. 52 contains large amount of Mg in the intermediate member, a surface oxidation is caused, thereby failing to obtain sound cladding plate. Since Specimen No. 53 contains large amount of Cu in the intermediate member, an elongation is too small, and cracks are happened in the press forming process, and press forming article can not obtained.

Since Specimen No. 54 contains small amount of Cu in the core member, an electric potential in the core member can not make to be sufficiently noble, resulting in causing penetration in the corrosion resistance test, and a tensile strength after brazing process is deteriorated. Since Specimen No. 55 contains large amount of Ti in the core member, and forms large intermetallic compound in casting process, a sound cladding plate can not obtained. Since Specimen No. 56 contains small amount of Ti in the core member, a sufficient corrosion resistance can not be attained, resulting in forming deep penetrating hole in the corrosion resistant test. Since Specimen No. 57 contains large amount of Mg in the core member, thereby causing cracks in the press forming process, and the press forming article can not be obtained. No. 58 contains large amount of Mn in the core member, a sound cladding plate can not be obtained due to formation of large intermetallic compound. Since Specimen No. 59 contains small amount of Mn in the core member, a potential can not make the core member to be sufficiently noble, thereby an electric potential between the core member and intermediate member, or brazing member becomes lower resulting in causing penetrating hole in the corrosion resistant test, and also a tensile strength after brazing process is small.

Example 3

By continuous casting, aluminum alloys for a core member, having compositions shown in Table 13, and for an intermediate member, having compositions shown in Table 14, were casted into ingots, and were treated for homogenization. For forming the intermediate member, the ingot was hot rolled to a desired thickness. Separately, a brazing member was prepared by casting an alloy( JIS BA4104, Si:10 %, Mg:1.5 %, and Bi:.0.1 %) in the same manner, and hot rolling at 480 °C to such a thickness that a cladding rate might be 10 %, after surface grinding thereof. The core member, and intermediate member, having the same identification numbers in each Tables, and together with the brazing member, were superposed in an order of brazing-intermediate-core, and hot cladding rolled at 480 °C to obtain cladding plate of 3 mm in thickness. The cladding plate, thus obtained, was further cold rolled, and annealed to form a cladding plate (O member, brazing sheet) having 0.5 mm in thickness. A thickness of the intermediate member was 15 % of the total plate thickness.

## Table 13

| Core member | Composition(wt%) | | | | | |
| --- | --- | --- | --- | --- | --- | --- |
| | Cu | Mn | Mg | Ti | Si | Fe |
| A | 0.31 | 0.89 | 0.23 | 0.19 | 0.08 | 0.22 |
| B | 0.17 | 1.51 | 0.32 | 0.18 | 0.08 | 0.22 |
| C | 0.28 | 0.58 | 0.29 | 0.22 | 0.09 | 0.23 |
| D | 0.33 | 0.98 | 0.17 | 0.12 | 0.08 | 0.18 |
| E | 0.16 | 1.14 | 0.22 | 0.16 | 0.09 | 0.16 |
| F | 0.29 | 1.31 | 0.07 | 0.14 | 0.09 | 0.16 |
| G | 0.31 | 1.22 | 0.46 | 0.20 | 0.07 | 0.21 |
| H | 0.25 | 0.84 | 0.20 | 0.07 | 0.08 | 0.21 |
| I | 0.32 | 0.74 | 0.19 | 0.26 | 0.07 | 0.21 |

Table 14

| Intermediate member | Composition(wt%) | | | |
| --- | --- | --- | --- | --- |
| | Zn | Mg | Si | Fe |
| a | 2.3 | 0.82 | 0.08 | 0.18 |
| b | 1.8 | 0.54 | 0.08 | 0.18 |
| c | 4.7 | 0.74 | 0.08 | 0.18 |
| d | 2.5 | 1.10 | 0.07 | 0.17 |
| e | 1.4 | 0.94 | 0.09 | 0.22 |
| f | 3.3 | 0.53 | 0.09 | 0.24 |

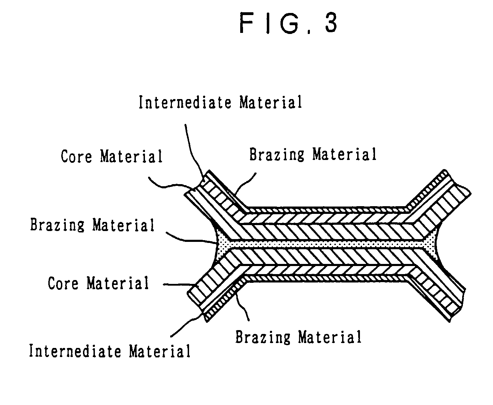

A circular plate was cut out from the cladding plate, and press formed into a shape 1, as shown in Fig. 1, so that the intermediate member might form convex face. The cop shaped pressing articles 2, shown in Fig. 2, were alternately interposed as shown in Fig. 2, and vacuum brazed to form brazed article 3. The brazing process was carried out under $5 \times 10^{-5}$ Torr, or lower of vacuum, at 600 °C maintaining for 3 minutes. A detailed cross sectional view of the brazing part after brazing process are shown in Fig. 3.

The tensile strength before and after brazing process, a brazing attacking state to the core member, and Zn concentrations at the boundary between the intermediate member and core member, are evaluated in the same manner as in the Example 1, and a corrosion resistance test of the Specimens were conducted in the same manner as in the Example 1. Result are shown in Table 15. As seen from the results in Table15, any specimens according to the present invention were able to form a sound cladding steel without causing warp in hot cladding rolling process, shows no penetration of the brazing member, shows excellent in tensile strength after brazing, and causes no cracking in a press forming process into a cup shaped article. In the corrosion resistance test, a maximal corrosion depth shows all less the 0.2 mm, and an excellent corrosion resisting property was exhibited without causing leakage in the brazed articles.

Table 15

| Specimen | Combination | | Tensile property | | | Zn concentration | | Corrosion test |
|---|---|---|---|---|---|---|---|---|
| | Core member | Intermediate member | Before brazing | | After brazing | Boundary between intermediate member and core member | Brazing side of core member | Maximal corrosion depth |
| | | | $\sigma$ | $\delta$ | $\sigma$ | | | |
| | | | MPa | % | MPa | % | % | mm |
| 60 | A | a | 145 | 26 | 150 | 0.7 | 0.08 | 0.09 |
| 61 | B | a | 155 | 26 | 165 | 0.7 | 0.08 | 0.13 |
| 62 | C | a | 135 | 28 | 140 | 0.7 | 0.08 | 0.10 |
| 63 | D | a | 145 | 26 | 145 | 0.7 | 0.08 | 0.11 |
| 64 | E | a | 145 | 28 | 145 | 0.7 | 0.08 | 0.15 |
| 65 | F | a | 150 | 29 | 150 | 0.7 | 0.08 | 0.11 |
| 66 | G | a | 145 | 27 | 150 | 0.7 | 0.08 | 0.12 |
| 67 | H | a | 140 | 30 | 140 | 0.7 | 0.08 | 0.14 |
| 68 | I | a | 140 | 27 | 145 | 0.7 | 0.08 | 0.09 |
| 69 | A | b | 140 | 26 | 140 | 0.6 | 0.03 | 0.11 |
| 70 | A | c | 145 | 27 | 145 | 1.7 | 0.24 | 0.08 |
| 71 | A | d | 150 | 25 | 150 | 0.8 | 0.08 | 0.09 |
| 72 | A | e | 145 | 26 | 145 | 0.5 | 0.03 | 0.12 |
| 73 | A | f | 150 | 26 | 140 | 0.1 | 0.15 | 0.08 |

Note "Zn concentration at brazing side of core member" means an average Zn concentration from thickness center of core member to a boundary between core member and intermediate member.

Comparative Example 3

By continuous casting, aluminum alloys for a core member, having compositions shown in Table 16, those for an intermediate member, having compositions shown in Table 17, and an alloy for brazing member ( JIS BA4104 ) were casted into ingots, and hot cladding rolled under the same conditions as of the Example 3, to form cladding plate having 3 mm in thickness. Subsequently the cladding plate was cold rolled, and annealed to finally obtain a cladding plate (O member, brazing sheet) having 0.5 mm in thickness. The cladding plate, thus obtained, was press formed, and treated with vacuum brazing in the same as of the Example 1, to evaluate possibility for press forming, and measured tensile strength, corrosion resistance test and micro structure observation. Furthermore, a deforming resistance of the core member, and of the intermediate member was evaluated, respectively, in the same manner as in the Example 1. The results of the deforming resistance for the core member and intermediate member, a ratio thereof, a thickness of the intermediate member, possibility in the press forming, a tensile strength, corrosion test, and microstructure observation are shown in Table 18.

Table 16

| Core member | Composition(wt%) | | | | | |
|---|---|---|---|---|---|---|
| | Cu | Mn | Mg | Ti | Si | Fe |
| J | 0.3 | 0.35 | 0.2 | 0.2 | 0.08 | 0.22 |
| K | 0.3 | 1.84 | 0.2 | 0.2 | 0.08 | 0.22 |
| L | 0.08 | 0.8 | 0.2 | 0.2 | 0.09 | 0.23 |
| M | 0.39 | 0.8 | 0.2 | 0.2 | 0.08 | 0.18 |
| N | 0.3 | 0.8 | 0.02 | 0.2 | 0.09 | 0.16 |
| O | 0.3 | 0.8 | 0.66 | 0.2 | 0.09 | 0.16 |
| P | 0.3 | 0.8 | 0.2 | 0.03 | 0.07 | 0.21 |
| Q | 0.3 | 0.8 | 0.2 | 0.37 | -- | -- |

Table 17

| Intermediate member | Composition(wt%) | | | |
|---|---|---|---|---|
| | Zn | Mg | Si | Fe |
| g | 2.5 | 0.43 | 0.09 | 0.23 |
| h | 2.0 | 1.32 | 0.08 | 0.18 |
| i | 0.7 | 0.8 | 0.09 | 0.16 |
| j | 5.8 | 0.8 | 0.09 | 0.16 |

Table 18

| Specimen | Combination | | Press forming | Penetration of the brazing member | Zn concentration | | Tensile property | | | Corrosion test | |
|---|---|---|---|---|---|---|---|---|---|---|---|
| | Core member | Intermediate member | | | Boundary between intermediate member and core member | Brazing side of core member | Before brazing | | After brazing | Maximal corrosion depth | Occurring of the leakage from brazing article |
| | | | | | | | $\sigma$ | $\delta$ | $\sigma$ | | |
| | | | | | % | % | MPa | % | MPa | mm | |
| 74 | J | a | O | O | 0.7 | 0.04 | 110 | 42 | 90 | 0.10 | O |
| 75 | K | a | -- | -- | -- | -- | -- | -- | -- | -- | -- |
| 76 | L | a | O | O | 0.7 | 0.04 | 125 | 35 | 120 | 0.39 | × |
| 77 | M | a | × | -- | -- | -- | 130 | 23 | -- | -- | -- |
| 78 | N | a | O | O | 0.7 | 0.04 | 145 | 28 | 140 | 0.25 | O |
| 79 | O | a | O | × | 0.7 | 0.04 | 145 | 25 | 150 | 0.33 | O |
| 80 | P | a | O | O | 0.7 | 0.04 | 145 | 27 | 140 | 0.44 | × |
| 81 | Q | a | -- | -- | -- | -- | -- | -- | -- | -- | -- |
| 82 | A | g | -- | -- | -- | -- | -- | -- | -- | -- | -- |
| 83 | A | h | O | O | 0.5 | 0.03 | 150 | 25 | 155 | -- | -- |
| 84 | A | i | O | O | 0.3 | 0.00 | 145 | 26 | 140 | 0.27 | O |
| 85 | A | j | O | O | 2.2 | 0.34 | 145 | 26 | 145 | 0.24 | O |

Note   "Zn concentration at brazing side of core member" means an average Zn concentration from
thickness center of core member to a boundary between core member and intermediate member.
Note: Press forming   O:Yes   ×:Causing cracks
Leakage from brazing article   O:No leakage   ×:Causing leakage
Penetration of brazing member   O:No penetration   ×:penetrating

As seen from the results in Table 18, following Specimens are studied as follows:

Since Specimen No. 74 contains small amount of Mn in the core member, a strength after brazing is inferior. Since Specimen No. 75 contains large amount of Mn in the core member, a large crystal product is formed in casting process, and excellent cladding member can not be formed. Since Specimen No. 76 contains small amount of Cu contained in the core member, a deep corrosion is caused in the core member and penetration hole is formed in the brazing article. Since Specimen No. 77 contains large amount of Cu contains in the core member, an elongation of the raw element is too small, and excellent press forming can not be expected. Since Specimen No. 78 contains small amount of Mg in the core member, a depth of the corrosion is too deep. Since Specimen No. 79 contains large amount of Mg in the core member, a penetration of brazing is serious. Since Specimen No. 80 contains small amount of Ti, a depth of corrosion becomes large, and a penetration hole is formed in the brazing article. Since Specimen No. 81 contains large amount of Ti in the core member, a coarse crystal is produced, thereby disturbing to obtain sound cladding member.

Since Specimen No. 82 contains small amount of Mg in the intermediate member, a plate is largely warped in cladding rolling process, thereby being unable to obtain brazing sheet. Since Specimen No. 83 contains large amount of Mg in the intermediate member, a brazing defect is caused. Since Specimen No. 84 contains small amount of Zn in the intermediate member, the amount of Zn in boundary between the intermediate member and the core member is small so that the sacrificial anodedffect of the intermediate member is low, leading to a deep corrosion depth. Since Specimen No. 85 contains too much amount of Zn in the intermediate member, an adequate concentration gradient can not be

EP 0 823 305 A2

formed, and a corrosion depth is serious. Further, a large amount of Zn is evaporated and deposited onto wall surface of furnace.

According to the present invention, there is to provide an aluminum alloy brazing sheet for heat exchanger, which shows an excellent corrosion resistance, and cladding rolling property, and an aluminum alloy heat exchanger forming therewith. Said brazing sheet is suitable for applying as a constituting member of the fluid path in the aluminum alloy heat exchanger for car, particularly suitably used as a core plate in the drown cup type heat exchanger.

**Claims**

1. A brazing sheet for heat exchanger which has excellent anticorrosion property, and is of four layered aluminum alloy cladding member, in which one side of a core member is cladded with an intermediate member of less-noble than a core member, and the other side of both core member and intermediate member are cladded with Al-Si-Mg type cladding member, wherein the core member is of aluminum alloy comprising 0.5 to 1.6 % of Mn, 0.15 to 0.35 % of Cu, 0.05 to 0.70 % of Mg, 0.06 to 0.30 % of Ti, and remainder of Al and unavoidable impurity.

2. The brazing sheet for heat exchanger of claim 1, wherein the aluminum alloy of the core member comprises 0.7 to 1.4 % of Mn, 0.15 to 0.35 % of Cu, 0.05 to 0.70 % of Mg, 0.06 to 0.30 % of Ti, and remainder of Al and unavoidable impurity.

3. The brazing sheet for heat exchanger of claim 1, wherein the intermediate member is made of an aluminum alloy which comprises 0.3 to 1.5 % of Mg and remainder of aluminum and unavoidable impurity, and has 70 to 130 % of deforming resistance, wherein a thickness thereof is 30 to 150 μm.

4. The brazing sheet for heat exchanger of claim 1, wherein the aluminum alloy of the intermediate member comprises 0.5 to 1.5 % of Mn and remainder of aluminum and unavoidable impurity, and has 70 to 130 % of deforming resistance, wherein a thickness thereof is 30 to 150 μm.

5. The brazing sheet for heat exchanger of claim 4, wherein the aluminum alloy of the intermediate member comprises 0.7 to 1.2 % of Mn and remainder of aluminum and unavoidable impurity.

6. The brazing sheet for heat exchanger of claim 1, wherein the aluminum alloy of the intermediate member comprises 0.5 to 1.2 % of Mn, 0.05 to 1.2 % of Mg and remainder of aluminum and unavoidable impurity.

7. The brazing sheet for heat exchanger of claim 6, wherein the aluminum alloy of the intermediate member comprises 0.7 to 1.2 % of Mn, 0.05 to 1.2 % of Mg and remainder of aluminum and unavoidable impurity.

8. The brazing sheet for heat exchanger of claim 1, wherein the aluminum alloy of the intermediate member comprises 1 to 5 % of Zn, 0.5 to 1.2 % of Mg and remainder of aluminum and unavoidable impurity.

9. The brazing sheet for heat exchanger of claim 1, wherein the aluminum alloy of the intermediate member comprises 1.2 to 5 % of Zn, 0.5 to 1.2 % of Mg and remainder of aluminum and unavoidable impurity.

10. A heat exchanger of aluminum alloy, which is composed of four layered aluminum cladding brazing sheet, in which one side of a core member is cladded with an intermediate member having more basic than a core member, and the other sides of both core member and intermediate member are cladded with Al-Si-Mg type cladding member, wherein the core member is of aluminum alloy comprising 0.5 to 1.6 % of Mn, 0.15 to 0.35 % of Cu, 0.05 to 0.50 % of Mg, 0.06 to 0.30 % of Ti, and remainder of Al and unavoidable impurity, and the intermediate member is of aluminum alloy comprising 1 to 5 % of Zn, 0.5 to 1.2 % of Mg, and remainder of Al and unavoidable impurity, a plural number of the brazing sheets are superposed each other so that the intermediate members may be faced outward, and the superposed brazing sheets are joined together by brazing, wherein a concentration of Zn in boundary between the core member and the intermediate member after brazing is 0.5 to 2.5 %, and an average concentration of Zn between a thickness center of the core member to a boundary between the core member and a brazing member, is 0.3 % or lower.

28

FIG. 1

FIG. 2

# F I G. 3

Intermediate Material

Core Material    Brazing Material

Brazing Material

Core Material

Intermediate Material    Brazing Material